(19) Europäisches Patentamt
European Patent Office
Office européen des brevets

(11) **EP 3 255 802 B1**

(12) **FASCICULE DE BREVET EUROPEEN**

(45) Date de publication et mention
de la délivrance du brevet:
**01.04.2020 Bulletin 2020/14**

(51) Int Cl.:
**H04B 1/525** ^(2015.01)

(21) Numéro de dépôt: **17174149.9**

(22) Date de dépôt: **02.06.2017**

(54) **DISPOSITIF ET PROCÉDÉ POUR LE TRAITEMENT D'UN SIGNAL RECU PAR UN RÉCEPTEUR PERTURBÉ PAR UN ÉMETTEUR**

VORRICHTUNG UND VERFAHREN FÜR DIE VERARBEITUNG EINES SIGNALS, DAS VON EINEM DURCH EINEN SENDER GESTÖRTEN EMPFÄNGER EMPFANGEN WIRD

DEVICE AND METHOD FOR PROCESSING A SIGNAL RECEIVED BY A RECEIVER DISRUPTED BY A TRANSMITTER

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **06.06.2016 FR 1655130**

(43) Date de publication de la demande:
**13.12.2017 Bulletin 2017/50**

(73) Titulaire: **Airbus DS SLC**
**78990 Elancourt (FR)**

(72) Inventeurs:
• **GAGEY, Olivier**
**75006 Paris (FR)**
• **MEGE, Philippe**
**92340 Bourg La Reine (FR)**
• **MOLKO, Christophe**
**78450 Villepreux (FR)**

(74) Mandataire: **Cabinet Camus Lebkiri**
**25 rue de Maubeuge**
**75009 Paris (FR)**

(56) Documents cités:
EP-A1- 2 779 562      US-A1- 2006 055 594
US-A1- 2011 263 195      US-A1- 2015 171 903

**Description**

**DOMAINE**

Le domaine de l'invention concerne les systèmes traitant les interférences entre différents systèmes de communication radio co-localisés pour les réduire, voire les supprimer. A cet effet, le domaine de l'invention concerne l'élimination des interférences par application d'une correction analogique et d'une correction numérique. L'invention concerne un dispositif et un procédé pour la réduction de l'intensité d'un signal interférant présent dans un signal reçu.

**ETAT DE L'ART**

Quand deux équipements radio sont placés à proximité ils peuvent interférer, ce qui entraîne une dégradation de la qualité des communications. Plus précisément, le signal émis par un émetteur, appelé également signal « direct » ou signal « interférant », se superpose au signal « utile » reçu par un récepteur.

A cause de la proximité entre les deux équipements le signal direct est très intense par rapport au signal utile, qui contient les informations qui doivent être reçues par le récepteur.

Les interférences entre les deux équipements sont dues principalement à deux effets.

Du fait que le signal émis par l'émetteur est très intense au niveau de l'antenne du récepteur, les amplificateurs de ce dernier peuvent être saturés. Cet effet, connu également comme désensibilisation du récepteur, peut avoir lieu même si la porteuse de l'équipement émetteur se trouve en dehors de la bande de réception de l'équipement récepteur.

Le deuxième effet est dû au bruit large bande qui est associé au signal direct. Ce bruit large bande peut être du notamment aux non-linéarités des différents modules présents au niveau de l'émetteur. Ce bruit large bande peut recouvrir totalement ou partiellement la bande fréquentielle de réception du deuxième équipement.

Les interférences sont particulièrement importantes quand la bande fréquentielle de l'émetteur est proche de la bande fréquentielle du récepteur voire quand les deux bandes fréquentielles sont coïncidentes.

Une des solutions connues de l'homme du métier pour la réduction de l'intensité du signal interférant est l'utilisation de filtres radiofréquence ou filtres RF.

Néanmoins, ces solutions se révèlent peu pratiques du fait de devoir choisir des filtres RF spécifiques pour chaque bande d'émission/réception ou non applicables quand l'émission et la réception utilisent la même bande de fréquence. De plus, les filtres RF produisent des pertes d'insertion qui peuvent diminuer la puissance du signal émis lorsqu'ils sont placés en émission et la sensibilité de l'équipement récepteur lorsqu'ils sont placés en réception.

D'autres solutions connues de l'homme du métier concernent l'élimination physique des interférences par soustraction ou compensation du signal interférant. Ces méthodes reposent sur une soustraction analogique d'un signal référence au signal reçu afin de récupérer le signal utile uniquement.

Le signal référence peut être obtenu en réalisant une copie analogique du signal émis et en modifiant son amplitude et phase à l'aide d'un circuit de traitement analogique.

Ce procédé de correction analogique est très adapté pour l'élimination des effets de désensibilisation du récepteur et permet d'éviter la saturation de l'équipement récepteur. Néanmoins ce procédé de correction analogique n'est efficace que si la copie analogique du signal émis est suffisamment bien synchronisée temporellement avec l'interférence à éliminer. De plus, les solutions connues de l'homme du métier ne permettent pas de prendre en compte les distorsions du signal référence introduites par le circuit de traitement analogique.

Certains systèmes, également connus de l'homme du métier, permettent de réaliser un traitement numérique des interférences dans la bande de l'équipement récepteur. Ce traitement permet généralement de combiner les signaux en réalisant des opérations plus complexes qui ne seraient pas possibles avec des traitements analogiques. Un exemple d'un tel système est décrit dans le document US 2015/0171903.

Dans ce cas le signal référence est un signal numérique prélevé au niveau de l'équipement émetteur avant sa conversion en format analogique, opération préalable à la transmission.

Néanmoins, le signal référence numérique étant prélevé avant la conversion en signal analogique, ces solutions sont incapables de prendre en compte les non-linéarités de la chaîne d'amplification de l'équipement émetteur. Ces non-linéarités sont au moins en partie responsables du bruit large bande observé dans le canal de réception.

**RESUME DE L'INVENTION**

Pour pallier ces difficultés, un premier aspect de la présente invention, qui est définie par les revendications, concerne un dispositif de traitement d'un signal reçu par un récepteur perturbé par un émetteur, lesdits émetteur et récepteur étant co-localisés, ledit dispositif étant caractérisé en ce qu'il comprend :

• un premier coupleur configuré pour prélever un premier signal référence à partir d'un signal interférant émis par l'émetteur, ledit premier signal référence étant prélevé après la chaîne d'amplification reliée à l'antenne de l'émetteur ;

- un circuit analogique de traitement du premier signal référence délivrant un signal référence modifié, ledit circuit analogique de traitement modifiant l'un au moins des paramètres parmi lesquels : l'amplitude et/ou la phase et/ou le décalage temporel du premier signal référence, le signal référence modifié étant adapté pour compenser le signal interférant émis par l'émetteur et présent dans le signal reçu par le récepteur ;
- un second coupleur configuré pour combiner le signal référence modifié avec le signal reçu par une antenne du récepteur et délivrant le signal combiné à un deuxième module de conversion analogique numérique;
- un premier module de conversion analogique numérique numérisant le premier signal référence afin de délivrer à un dispositif numérique de traitement des signaux un premier signal de référence numérique ;
- le deuxième module de conversion analogique numérisant le signal combiné afin de délivrer un signal combiné numérique au dispositif numérique de traitement des signaux, le dispositif de traitement de signaux combinant le signal combiné numérique et au moins le premier signal référence numérique afin de réduire l'intensité du signal interférant présent dans le signal combiné numérique, ledit dispositif de traitement des signaux délivrant un signal résultant numérique à un module de traitement de l'information de l'équipement récepteur.

On entend par émetteur radio un module d'émission de signaux radio relié à une antenne.

On entend par récepteur radio un module de réception de signaux radio relié à une antenne.

On entend par récepteur et émetteur co-localisés deux équipements placés à proximité. Quand un émetteur et un récepteur sont co-localisés le signal émis par l'émetteur interfère avec le signal utile reçu par le récepteur. Le signal reçu par le récepteur est donc une combinaison du signal interférant émis par l'émetteur et du signal utile. Par exemple un émetteur et un récepteur placés sur le toit d'un même véhicule sont co-localisés au sens de l'invention.

L'émetteur et le récepteur co-localisés peuvent par exemple être placés sur deux équipements radio différents voire être placé sur un même équipement.

L'émetteur et le récepteur peuvent être reliés à une même antenne.

On entend par signal interférant le signal émis par l'antenne de l'émetteur et reçu par l'antenne du récepteur.

On entend par signal reçu par le récepteur le signal comprenant la superposition d'un signal utile et du signal interférant.

On entend par signal utile le signal contenant les informations destinées à l'équipement radio équipé avec le récepteur.

On entend par circuit analogique de traitement un circuit capable de modifier la phase et/ou l'amplitude et/ou le décalage temporel du signal à son entrée. Dans la présente invention le signal en entrée du circuit analogique est une copie du signal interférant.

On entend par coupleur configuré pour combiner le premier signal de référence avec le signal reçu, par exemple, un circuit capable de sommer les deux signaux.

On entend par module de conversion analogique numérique un ensemble de circuits capable de numériser un signal analogique en entrée. Dans une réalisation particulière de la présente invention un tel module de conversion analogique numérique comprend au moins un convertisseur analogique numérique, au moins un filtre passe bas et au moins un mélangeur pour la décomposition en bande de base des signaux en entrée. Par exemple, un tel module de conversion analogique numérique délivre à sa sortie les deux composantes en bande de base du signal en entrée.

On entend par dispositif de traitement numérique des signaux un dispositif capable de réaliser des opérations mathématiques sur des signaux numériques par exemple à l'aide d'au moins un microprocesseur. Un dispositif de traitement numérique au sens de l'invention peut être intégré dans un ordinateur ou tout autre dispositif de calcul numérique. Dans le cas de l'invention ce dispositif de traitement numérique des signaux peut par exemple minimiser l'écart entre le signal combiné numérique et le signal référence numérique afin de retrouver le signal utile.

De façon générale, le dispositif selon l'invention permet de traiter le signal reçu par le récepteur. Le signal reçu contient le signal utile, formé par les informations destinées aux utilisateurs du récepteur. En plus du signal utile, le signal reçu contient le signal interférant émis par le premier équipement radio. Il peut comprendre également du bruit.

Le dispositif selon l'invention permet d'extraire le signal utile du signal reçu, notamment en réduisant l'intensité du signal interférant dans le signal reçu par le récepteur.

L'élimination du signal interférant est réalisée par le dispositif selon l'invention à l'aide d'une première correction analogique et d'une deuxième correction numérique.

La première correction analogique est effectuée en combinant le signal référence modifié et le signal reçu. A cette fin, le circuit de traitement analogique fournit le signal référence modifié qui est par exemple une copie du signal interférant, prise en sortie de l'émetteur, modifié en amplitude de façon à ce que son amplitude soit égale à celle du signal interférant présent dans le signal reçu et déphasé de façon à ce que sa phase soit à 180° de celle du signal interférant présent dans le signal reçu. La combinaison des deux signaux est réalisée à l'aide du deuxième coupleur afin de compenser le signal interférant présent dans le signal reçu.

Par exemple, quand le signal référence modifié est une copie du signal interférant, prise en sortie de l'émetteur, modifié en amplitude de façon à ce que son amplitude soit égale à celle du signal interférant présent dans le signal reçu et déphasé de façon à ce que sa phase soit à 180° de celle du signal interférant présent dans le signal reçu, le deuxième coupleur effectue la somme du signal référence modifié et du signal reçu afin d'effacer le signal interférant présent dans le signal reçu. Le deuxième coupleur fournit à sa sortie le signal combiné, à savoir le signal reçu auquel le signal référence modifié a été ajouté.

Avantageusement, la première correction analogique permet de manipuler des signaux très intenses et elle est particulièrement adaptée pour éviter le phénomène de saturation du récepteur.

Avantageusement, le signal référence analogique, appelé premier signal référence et utilisé pour la correction analogique, est prélevé après la chaîne d'amplification de l'émetteur. Cela permet de prendre en compte toutes les distorsions analogiques introduites par les différents modules de l'émetteur et de rendre plus efficace la correction numérique.

Le dispositif selon l'invention applique aussi une correction numérique au signal reçu par le deuxième équipement à l'aide d'un signal référence numérique.

La correction numérique est réalisée à l'aide du dispositif de traitement numérique des signaux. Le dispositif de traitement numérique des signaux combine le signal combiné numérique et au moins un signal référence numérique.

Avantageusement, la correction numérique permet d'effectuer des opérations mathématiques complexes en combinant au moins deux signaux numériques.

Avantageusement, la correction numérique permet d'éliminer le signal interférant résiduel après la correction analogique.

Avantageusement, la correction numérique permet d'éliminer les interférences dues au bruit large bande du signal interférant dans la bande fréquentielle du récepteur dans le cas où les fréquences émission et réception sont différentes.

Avantageusement, le signal référence numérique est obtenu par numérisation du premier signal référence qui est prélevé en sortie de l'émetteur et notamment après la chaîne d'amplification de l'émetteur. Cela permet de prendre en compte l'ensemble de toutes les distorsions analogiques introduites par les différents modules de l'émetteur.

A titre d'exemple, la correction numérique peut être appliquée en minimisant par procédure itérative la différence entre le signal combiné numérique - c'est-à-dire le signal reçu auquel la première correction analogique a été appliquée et qui a été numérisé - et le signal référence numérique multiplié par un paramètre d'ajustement. Cette procédure permet d'extraire le signal utile et de le transmettre à un module de traitement de l'information du récepteur.

Selon un mode de réalisation, deux signaux de référence sont utilisés, le premier signal référence numérisé et le signal référence modifié numérisé. Le signal référence modifié numérisé est obtenu en numérisant le signal référence modifié prélevé en sortie du circuit de traitement analogique.

Avantageusement, le signal référence modifié numérisé permet de prendre en compte, lors de l'élimination numérique des interférences, les éventuelles distorsions introduites par le circuit de traitement analogique du premier signal référence.

Le dispositif de réduction de l'intensité d'un signal interférant selon l'invention peut également présenter une ou plusieurs des caractéristiques ci-dessous, considérées individuellement ou selon toutes les combinaisons techniquement possibles :

- il comprend un troisième module de conversion analogique numérique numérisant le signal référence modifié afin de délivrer au dispositif numérique de traitement des signaux un signal référence modifié numérique, ledit signal référence modifié étant prélevé après le circuit de traitement analogique, le dispositif de traitement de signaux combinant le signal combiné numérique et deux signaux référence numériques, le premier signal référence numérique et le signal référence modifié numérique afin de réduire l'intensité du signal interférant présent dans le signal combiné numérique, ledit dispositif de traitement des signaux délivrant un signal résultant numérique à un module de traitement de l'information de l'équipement récepteur ;
- le récepteur est un récepteur de type bande étroite dont la largeur de bande est inférieure à 10MHz ;
- au moins un module de conversion analogique numérique comprend au moins un des éléments suivants : un oscillateur local, un mélangeur pour la décomposition du signal en entrée en bande de base, un filtre passe bas pour éliminer la fréquence image, un convertisseur analogique numérique pour fournir la version numérique des composantes en bande de base du signal en entrée ;
- le circuit de traitement analogique comprend au moins un déphaseur variable et un gain variable pour la génération du signal référence modifié;
- le circuit de traitement analogique comprend en outre un circuit à retard fixe et/ou un circuit à retard paramétrable pour la génération du signal référence modifié.
- le dispositif numérique de traitement des signaux comprend au moins un processeur ou d'autres moyens de calcul.

Un autre objet de la présente invention concerne un procédé de mise en œuvre du dispositif de réduction de l'intensité d'un signal interférant, ledit procédé comportant les étapes suivantes :

- prélèvement d'un premier signal référence à partir du signal interférant émis par l'émetteur ;

- modification des propriétés du premier signal référence à l'aide d'un circuit analogique pour obtenir un signal référence modifié, ledit signal référence modifié étant adapté pour compenser le signal interférant émis par l'émetteur et présent dans le signal reçu par le récepteur ;

- combinaison du signal référence modifié et du signal reçu par le récepteur pour obtenir le signal combiné;

- conversion analogique numérique du signal combiné pour obtenir le signal combiné numérique ;

- conversion analogique numérique du premier signal référence pour obtenir un premier signal référence numérique, ledit premier signal référence étant prélevé après la chaîne d'amplification reliée à l'antenne de l'émetteur ;

- combinaison à l'aide du dispositif de traitement des signaux du signal combiné numérique et d'au moins le premier signal référence numérique afin d'éliminer le signal interférant présent dans le signal combiné numérique ;

- envoi du signal résultant numérique à un module de traitement de l'information de l'équipement récepteur.

Le procédé de mise en œuvre du dispositif de réduction de l'intensité d'un signal interférant selon l'invention peut également présenter une ou plusieurs des caractéristiques ci-dessous, considérées individuellement ou selon toutes les combinaisons techniquement possibles :

- Il comprend une étape de conversion analogique numérique du signal référence modifié pour obtenir un signal référence modifié numérique, ledit signal référence modifié étant prélevé après le circuit de traitement analogique, la combinaison numérique à l'aide du dispositif de traitement des signaux du signal combiné numérique, du premier signal référence numérique et du signal référence modifié étant réalisée afin d'éliminer le signal interférant présent dans le signal combiné numérique .

- l'étape de combinaison à l'aide du dispositif de traitement des signaux du signal combiné numérique et du premier signal référence numérique afin d'éliminer le signal interférant présent dans le signal combiné numérique comprend la minimisation itérative de l'écart entre le signal combiné numérique et le premier signal référence numérique afin d'envoyer le signal résultant numérique à un module de traitement de l'information de l'équipement récepteur, l'écart à minimiser étant de la forme $R2n - \overline{Ref1n}^T.\overline{a}$, chacun des termes du vecteur $\overline{Ref1n}$ représentant le premier signal référence numérique avec un décalage temporel numérique donné, les termes du vecteur $\overline{a}$ ayant le rôle de paramètres d'ajustement;

- l'étape de combinaison du signal combiné numérique et du signal référence numérique à l'aide du dispositif de traitement des signaux afin d'éliminer le signal interférant présent dans le signal combiné numérique comprend la minimisation itérative de l'écart entre le signal combiné numérique et le signal référence numérique afin d'envoyer le signal résultant numérique à un module de traitement de l'information (60) de l'équipement récepteur (RE), l'écart à minimiser étant de la forme : espérance mathématique de ($\|R2n-\overline{Ref1n}^T.\overline{a}\|^2$), le vecteur $\overline{a}$ représentant les paramètres d'ajustement, chacun des termes du vecteur $\overline{Ref1n}$ représentant le premier signal référence numérique avec un décalage temporel numérique donné ;

- l'étape de combinaison à l'aide du dispositif de traitement des signaux du signal combiné numérique du premier signal référence numérique et du signal référence modifié numérique afin d'éliminer le signal interférant présent dans le signal combiné numérique comprend la minimisation itérative de l'écart entre le signal somme numérique, le premier signal référence numérique et le signal référence modifié numérique afin d'envoyer le signal résultant numérique à un module de traitement de l'information du récepteur, l'écart à minimiser étant de la forme $R2n'' = R2n - \overline{Ref1n}^T.\overline{a1} - \overline{Ref2n}^T.\overline{a2}$., chacun des termes du vecteur $\overline{Ref1n}$ représentant le premier signal référence numérique avec un décalage temporel numérique donné, les termes du vecteur $\overline{a_1}$ ayant le rôle de paramètres d'ajustement, chacun des termes du vecteur $\overline{Ref2n}$ représentant le signal référence modifié numérique avec un décalage temporel numérique donné, les termes du vecteur $\overline{a_2}$ ayant le rôle de paramètres d'ajustement ;

- l'étape de combinaison du signal combiné numérique et des signaux référence numériques à l'aide du dispositif de traitement des signaux afin d'éliminer le signal interférant présent dans le signal combiné numérique comprend la minimisation itérative de l'écart entre le signal combiné numérique et les signaux référence numériques afin d'envoyer le signal résultant numérique à un module de traitement de l'information (60) de l'équipement récepteur (RE), l'écart à minimiser étant de la forme : espérance mathématique de ( $\|R2n - \overline{Ref1n}^T.\overline{a_1} - \overline{Ref2n}^T.\overline{a_2}\|^2$), le vecteur $\overline{a_1}$ repré-

sentant les paramètres d'ajustement pour le premier signal référence numérique, chacun des termes du vecteur $\overline{Ref1n}$ représentant le premier signal référence numérique avec un décalage temporel numérique donné ; le vecteur $\overline{a_2}$ représentant les paramètres d'ajustement pour le signal référence modifié, chacun des termes du vecteur $\overline{Ref2n}$ représente le signal référence modifié numérique avec un décalage temporel numérique donné;

- la minimisation itérative de l'écart entre le signal combiné numérique et au moins un signal référence numériqueest réalisée à l'aide d'un algorithme de type gradient stochastique ;
- les étapes de conversion analogique numérique fournissent une représentation numérique des signaux en bande de base ;
- il comprend une étape de filtrage numérique, appliquée avant le dispositif de traitement numérique des signaux, du premier signal référence numérique, du signal référence modifié numérique et du signal combiné numérique afin de sélectionner la gamme fréquentielle qui correspond à la bande de réception du récepteur.

Un autre aspect de l'invention concerne un système d'émission/réception d'un signal radio comprenant au moins une antenne d'émission reliée à un équipement émetteur et une antenne de réception reliée à un équipement récepteur, ledit équipement d'émission/réception étant caractérisé en ce qu'il comprend le dispositif de réduction de l'intensité d'un signal interférant dans un signal reçu.

Un autre aspect de l'invention porte sur un équipement d'émission/réception d'un signal radio comprenant une antenne reliée à la fois à un équipement émetteur et à un équipement récepteur, ledit équipement étant caractérisé en ce qu'il comprend un dispositif de réduction de l'intensité d'un signal interférant.

## LISTE DES FIGURES

D'autres caractéristiques et avantages de l'invention ressortiront clairement de la description qui en est donnée ci-dessous, à titre indicatif et nullement limitatif, en référence aux figures annexées, parmi lesquelles :

- la figure 1 illustre le dispositif de réduction de l'intensité d'un signal interférant selon l'invention ;
- la figure 2 illustre une façon d'implémenter la procédure de réduction analogique de l'intensité d'un signal interférant selon l'invention ;
- la figure 3 illustre un exemple de module de conversion analogique numérique ;
- la figure 4 illustre un mode de réalisation du dispositif selon l'invention ;
- la figure 5 illustre un procédé de mise en œuvre du dispositif de réduction de l'intensité d'un signal interférant ;
- la figure 6a illustre un exemple des possibles interférences entre deux équipement d'émission/transmission utilisant deux systèmes de communication radio différents ;
- la figure 6b illustre un exemple d'application de la correction numérique selon l'invention.

## DESCRIPTION DETAILLEE

### Emetteur et récepteur co-localisés

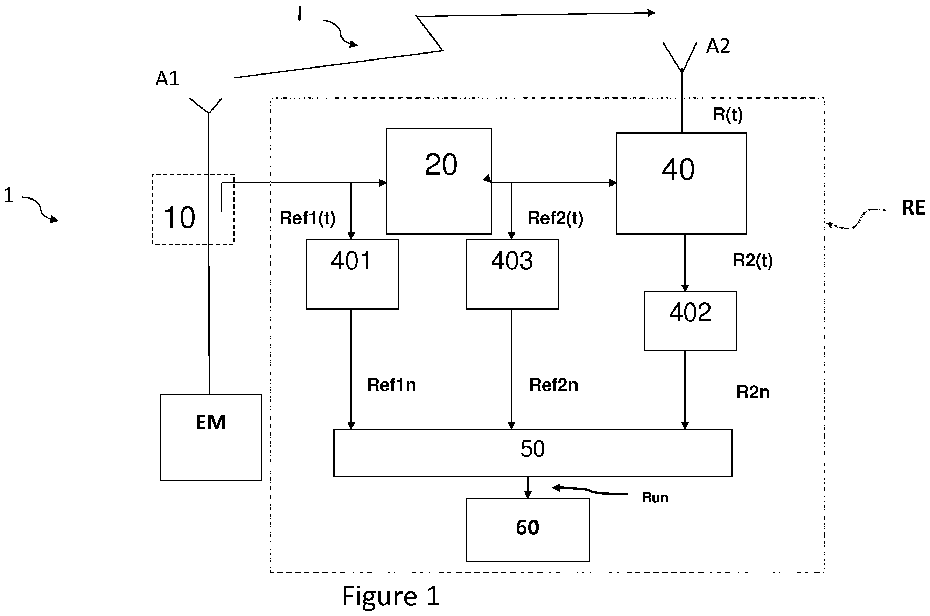

La figure 1 représente le dispositif 1 de réduction de l'intensité d'un signal interférant dans un signal reçu selon l'invention.

Le dispositif selon l'invention trouve application quand un émetteur EM et un récepteur RE sont co-localisés.

Dans une telle configuration, le signal reçu R est un signal qui comprend la combinaison du signal utile et du signal émis par l'émetteur. Le signal émis par l'émetteur est considéré comme un signal interférant I.

Le signal utile contient les informations destinées aux utilisateurs de l'équipement récepteur.

Le dispositif selon l'invention s'avère particulièrement utile dans les situations suivantes. Dans une première situation deux terminaux ou équipements radio sont placés à proximité. Dans ce cas le premier équipement comprend un émetteur EM relié à une antenne et le deuxième équipement comprend un récepteur RE relié à une antenne.

Grâce à la proximité de l'émetteur et du récepteur, il est possible de prélever directement une partie du signal émis. Le signal émis est utilisé comme signal référence par le dispositif 1 selon l'invention.

Le dispositif 1 selon l'invention utilise le signal référence pour appliquer une correction analogique et une correction numérique au signal reçu, afin d'en extraire le signal utile.

Selon un autre mode de réalisation, l'émetteur EM et le récepteur RE font partie du même équipement utilisateur.

L'émetteur EM et le récepteur RE peuvent soit utiliser le même système de communication radio soit utiliser deux systèmes différents.

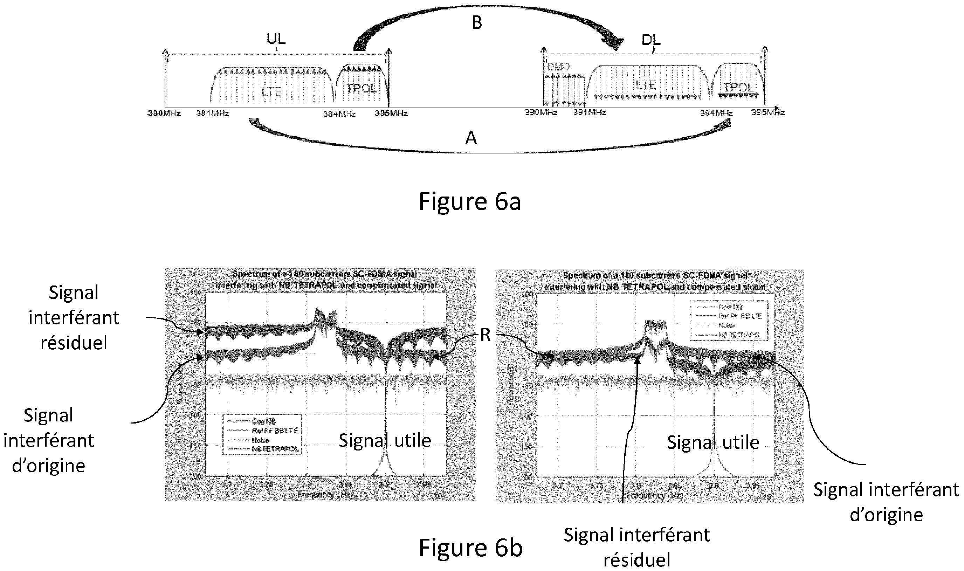

La figure 6a montre les bandes d'émission UL et de réception DL pour deux équipements radio co-localisés et utilisant deux systèmes de communication différents. Dans le cas illustré à la figure 6a un équipement utilise un système haut débit, par exemple un système LTE et un équipement utilise un système de type Tetrapol TPOL.

De façon connue de l'homme du métier, même si les gammes fréquentielles d'émission/réception ne se recouvrent pas, des effets d'interférences peuvent avoir lieu. Il s'agit notamment des effets de désensibilisation du récepteur et des interférences dues au bruit large bande généré par l'émetteur.

La flèche A de figure 6a représente les interférences causées par l'émission LTE sur la réception TPOL. La flèche B de figure 6a montre les interférences causées par l'émission TPOL sur la réception LTE.

Le dispositif selon l'invention applique une double correction analogique et numérique au signal reçu par le récepteur RE, le but de la correction étant celui de réduire l'intensité du signal interférant dans le signal reçu.

La première correction appliquée par le dispositif 1 selon l'invention est une correction analogique.

## Coupleur 10

Le coupleur 10 prélève une partie du signal émis par l'émetteur EM ou signal interférant I.

Selon un mode de réalisation, le coupleur 10 est un coupleur radiofréquence ou un diviseur de puissance asymétrique. Tout autre type de coupleur connu de l'homme du métier peut également être utilisé.

Le signal prélevé par le coupleur 10 est dit premier signal référence Ref1. Le premier signal référence Ref1 est envoyé à un circuit de traitement analogique 20. Il est également envoyé à un premier module de conversion analogique numérique 401.

Selon un mode de réalisation, le coupleur 10 est placé après la chaîne d'amplification de l'émetteur EM.

Selon un autre mode de réalisation, le coupleur est placé avant l'antenne d'émission reliée à l'émetteur.

Avantageusement, le coupleur 10 prélève le premier signal référence Ref1 après la chaîne d'amplification de l'émetteur ce qui permet de prendre en compte le bruit large bande introduit par les modules de sortie de l'émetteur.

## Circuit de traitement analogique 20, circuit à retard amélioré et coupleur 40

Le circuit de traitement analogique 20 délivre en sortie un signal référence modifié Ref2.

Selon un mode de réalisation le signal référence modifié Ref2 est une copie du signal interférant dont l'amplitude et la phase sont opportunément modifiées.

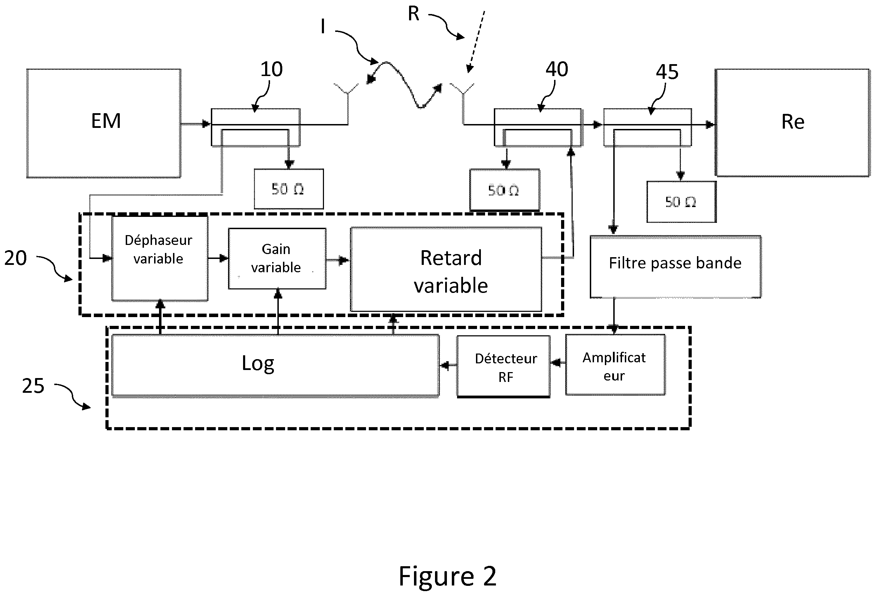

L'amplitude du signal référence modifié Ref2 est modifiée par le circuit gain variable de figure 2. Le circuit gain variable peut soit réduire l'amplitude du signal en entrée, en appliquant un gain négatif (exprimé en dB), soit augmenter l'amplitude du signal en entrée en appliquant un gain positif (exprimé en dB).

La phase du signal référence modifié Ref2 est modifiée par le circuit déphaseur variable de figure2.

Selon un mode de réalisation le circuit de traitement analogique 20 modifie l'amplitude du premier signal référence et le déphase de façon à être à 180 ° par rapport au signal interférant I tel qu'il est vu dans le signal reçu R.

Selon un mode de réalisation préféré de l'invention, le circuit de traitement analogique 20 comprend un circuit à retard amélioré selon la demande « Circuit à retard temporel d'un signal radiofréquence et dispositif d'e réduction d'interférences utilisant ledit circuit » déposée au nom d'Airbus DS SAS le 06/06/2016.

Par exemple, le circuit à retard amélioré est un circuit à retard pour le décalage temporel d'un signal radiofréquence d'entrée, ledit circuit à retard comprenant un filtre passe tout ayant une fréquence centrale donnée configuré pour linéariser le déphasage du signal de sortie par rapport au signal d'entrée en fonction de la fréquence sur une première gamme fréquentielle et caractérisé en ce qu'il comprend un premier circuit anti-résonant ayant une première fréquence centrale et un deuxième circuit anti-résonant ayant une deuxième fréquence centrale, le filtre passe tout et les deux circuits anti-résonants étant configurés et agencés pour linéariser le déphasage du signal en sortie par rapport au signal d'entrée en fonction de la fréquence sur une seconde gamme fréquentielle incluant la première gamme.

Avantageusement, le circuit de traitement analogique 20 permet de régler indépendamment l'amplitude, la phase et le décalage temporel du signal référence modifié Ref2.

Avantageusement, le circuit de traitement analogique 20 selon l'invention permet grâce au circuit à retard amélioré d'introduire un retard temporel constant ou quasi-constant sur la bande de réception du récepteur, ce qui est particulièrement adapté quand le récepteur est de type large bande.

Le deuxième coupleur 40 combine le signal référence modifié Ref2 avec le signal reçu R et délivre en sortie le signal combiné R2 afin de compenser le signal interférant I tel qu'il est vu dans le signal reçu R.

Grâce aux modifications d'intensité et phase introduites par le circuit de traitement 20, le signal référence modifié Ref2 efface au moins partiellement le signal interférant I tel qu'il est vu dans le signal reçu R. Autrement dit, le dispositif 1 selon l'invention réduit l'intensité du signal interférant I dans le signal reçu R.

Selon un mode de réalisation particulier le deuxième coupleur 40 effectue la somme du signal référence modifié Ref2 et du signal reçu R.

Avantageusement, quand le circuit de traitement analogique 20 modifie l'amplitude du premier signal référence de façon à ce que l'amplitude du signal référence modifié soit égale à l'amplitude du signal interférant I tel que vu dans le signal reçu R et le déphase de façon à être à 180° du signal I tel que vu dans le signal reçu R, le signal référence modifié ainsi obtenu peut être simplement sommé au signal reçu R afin d'effacer le signal interférant I.

Le signal combiné R2 délivré par le deuxième coupleur 20 est donc le signal reçu auquel une première correction analogique a été appliquée.

Selon un mode de réalisation, les paramètres du circuit de traitement analogique 20 sont réglés à l'aide d'une boucle de contrôle 25. La boucle de contrôle 25 est également une boucle de caractérisation du signal combiné R2.

La boucle de contrôle 25 reçoit en entrée une partie du signal combiné R2, prélevée par un coupleur 45 en sortie du deuxième coupleur 40.

La boucle de contrôle 25 comprend au moins un amplificateur radiofréquence, un détecteur de puissance radiofréquence et une unité de contrôle Log.

L'unité de contrôle Log modifie les paramètres du circuit de traitement analogique 20 pour minimiser l'intensité du signal interférant dans le signal combiné R2.

Avantageusement, la boucle de contrôle 25 permet d'optimiser les paramètres du circuit de traitement 20 pour minimiser le niveau du signal interférant dans le signal combiné R2.

Avantageusement, la correction analogique à l'aide du signal référence modifié Ref2 permet de traiter des signaux très intenses, ce qui est adapté pour prévenir les effets de saturation et désensibilisation dus au signal interférant.

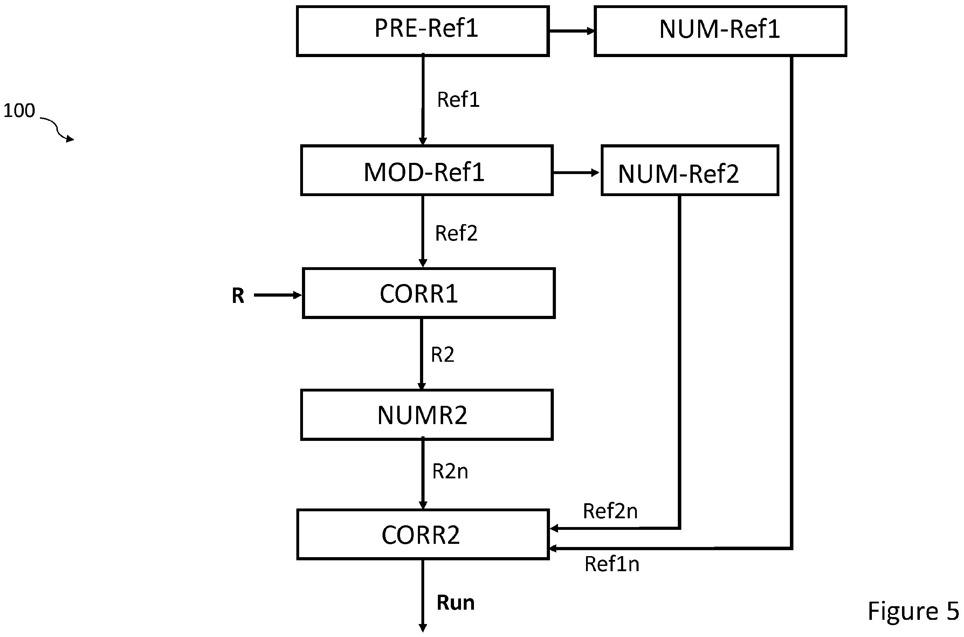

Selon un mode de réalisation, le circuit à retard variable de figure 5 est placé sur la connexion électrique reliant l'émetteur EM à une antenne A1.

Selon un mode de réalisation, le circuit à retard variable de figure 5 est placé sur la connexion électrique reliant le récepteur RE à une antenne A2.

Avantageusement, le placement du circuit à retard variable entre un équipement et l'antenne auquel il est relié permet d'introduire un retard sur le chemin antenne. Cela s'avère particulièrement utile quand le chemin antenne est parcouru plus rapidement que le circuit de traitement analogique 20 ou circuit de compensation. Par exemple, ce placement du circuit à retard est particulièrement avantageux quand les deux équipements EM et RE utilisent la même antenne.

## Module de conversion analogique numérique

Une partie du signal interférant peut encore être présente dans le signal combiné R2. Cela vient par exemple du bruit large bande introduit par les étapes d'amplifications de l'émetteur, qui peuvent avoir des comportements non-linéaires.

L'élimination de ce bruit large bande et / ou des multi trajets RF demande des opérations mathématiques plus complexes, pour lesquelles les traitements analogiques ne sont pas adaptés.

Pour en tenir compte le dispositif 1 selon l'invention applique une deuxième correction au signal reçu R, cette correction est numérique et est appliquée au signal combiné R2.

Le premier module de conversion analogique numérique 401 délivre à sa sortie le premier signal référence numérisé Ref1n.

Le deuxième module de conversion analogique numérique 402 délivre à sa sortie le signal combiné numérique R2n.

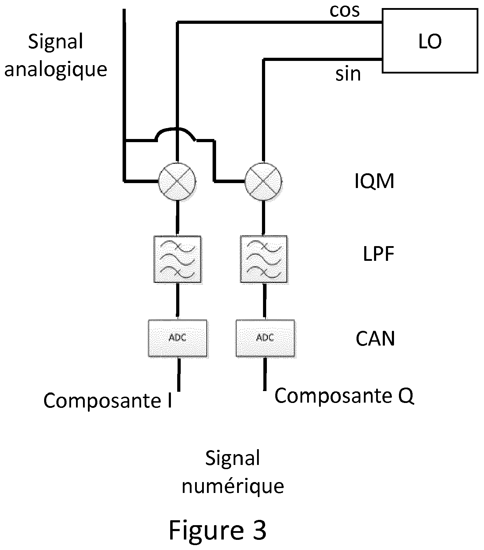

Un module de conversion analogique numérique selon un mode de réalisation de l'invention est illustré à la figure 3. La figure 3 représente la conversion analogique numérique en bande de base d'un signal analogique. Ce module de conversion analogique numérique selon le mode précité de réalisation de l'invention délivre à sa sortie les deux composantes en bande de base du signal numérisé.

Selon un mode de réalisation les modules de conversion analogique numérique comprennent au moins un oscillateur local LO et un mélangeur IQM.

Avantageusement, l'oscillateur local LO et le mélangeur IQM permettent d'obtenir une représentation du signal en bande de base.

Selon un mode de réalisation les modules de conversion 401,402 comprennent en outre au moins un filtre passe bas LPF.

Avantageusement, les filtres passe bas LPF permettent de filtrer la fréquence image.

Les modules de conversion analogique numérique 401, 402 comprennent également au moins un convertisseur analogique numérique CAN afin de délivrer en sortie la version numérique du signal en entrée.

Selon un mode de réalisation les convertisseurs analogique numérique délivrent les composantes en bande de base numérisées du signal en entrée.

## [Dispositif numérique de traitement des signaux 50 et correction numérique]

Le dispositif numérique de traitement des signaux 50 reçoit en entrée un ou plusieurs signaux référence numériques et le signal combiné numérique R2n.

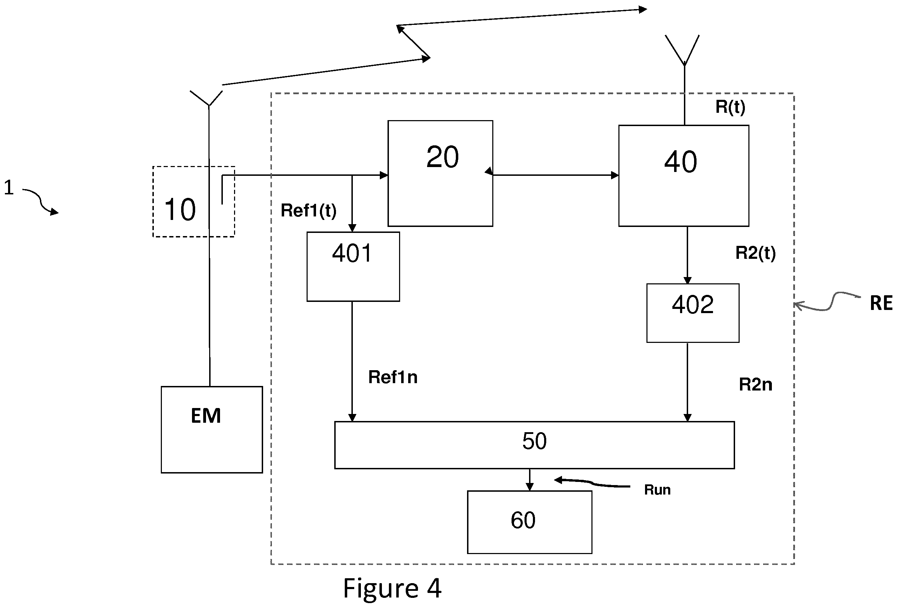

Selon un mode de réalisation, illustré à la figure 4, il y a un seul signal référence numérique qui est le premier signal référence numérique Ref1n. Le premier signal référence numérique Ref1n est obtenu en numérisant le premier signal référence Ref1 prélevé après la chaîne d'amplification de l'émetteur EM.

Avantageusement, ce mode de réalisation permet de prendre en compte dans le signal numérisé Ref1n le bruit large bande introduit par les non-linéarités de la chaîne d'amplification de l'émetteur.

Selon un mode de réalisation, illustré à la figure 1, deux signaux référence numériques sont utilisés, le premier signal référence numérique Ref1n et le signal référence modifié numérique Ref2n.

Un avantage de ce mode de réalisation est de prendre en compte dans le signal référence modifié numérique les distorsions introduites par le circuit de traitement analogique 20 et qui peuvent empêcher une correction complète du bruit large bande présent dans le signal reçu et qui peut masquer ou gêner le signal utile

Selon un mode de réalisation, illustré à la figure 4, le dispositif numérique de traitement des signaux 50 combine le signal combiné numérique R2n et le premier signal référence numérique Ref1 n afin de réduire l'intensité du signal interférant I et de fournir le signal résultant Ru, par exemple sous sa forme numérique Run, à un équipement de traitement des informations du récepteur.

Selon un mode de réalisation, le dispositif numérique de traitement des signaux 50 minimise la différence $R2n' = R2n - \overline{Ref1n}^T.\overline{a}$. Chacun des termes du vecteur $\overline{Ref1n}$ représente le premier signal référence numérique avec un décalage temporel numérique donné. Pour chacun des termes successifs du vecteur $\overline{Ref1n}$ le décalage temporel correspondant est supérieur à celui du terme précédent. Les termes du vecteur $\overline{a}$ ont le rôle de paramètres d'ajustement. La quantité $\overline{Ref1n}^T.\overline{a}$ est donc le premier signal référence numérique passé à travers un filtre numérique dont les coefficients sont les termes du vecteur $\overline{a}$. Il faut noter qu'il peut n'y avoir qu'un seul terme dans le vecteur $\overline{Ref1n}$.

Les termes du vecteur $\overline{a}$ peuvent par exemple être déterminés à l'aide d'une procédure itérative pour la minimisation de R2n'.

Une fois la procédure itérative complétée, R2n' représente le signal résultant numérique Run, qui est une approximation du signal utile numérisé, obtenu par le dispositif 1 en réduisant l'intensité du signal interférant I dans le signal reçu R avec une double correction analogique et numérique.

Selon ce mode de réalisation le dispositif de traitement numérique des signaux minimise la quantité $R2n' = R2n - \overline{Ref1n}^T.\overline{a}$.

Par exemple, la quantité à minimiser peut être l'espérance mathématique de $\|R2n - \overline{Ref1n}^T.\overline{a_1}\|^2$, Chacun des termes du vecteur $\overline{Ref1n}$ représente le premier signal référence numérique avec un décalage temporel numérique donné. Pour chacun des termes successifs du vecteur $\overline{Ref1n}$ le décalage temporel correspondant est supérieur à celui du terme précédent. Les termes du vecteur $\overline{a}$ ont le rôle de paramètres d'ajustement. La quantité $\overline{Ref1n}^T.\overline{a}$ est donc le premier signal référence numérique passé à travers un filtre numérique dont les coefficients sont les termes du vecteur $\overline{a}$. Il faut noter qu'il peut n'y avoir qu'un seul terme dans le vecteur $\overline{Ref1n}$.

Les termes du vecteur $\overline{a}$ peuvent par exemple être déterminés à l'aide d'une procédure itérative pour la minimisation de R2n'.

Selon un mode particulier de réalisation, R2n' peut être minimisé en utilisant un algorithme de type gradient stochastique.

Avantageusement, ce mode de réalisation permet d'appliquer une correction numérique au signal combiné R2 auquel une première correction analogique avait été appliquée.

Avantageusement, la deuxième correction qui est une correction numérique permet d'éliminer, dans la bande du signal utile, le bruit large bande associé au signal interférant.

Avantageusement, la correction numérique permet d'extraire le signal utile présent dans le signal reçu afin de l'envoyer à un module de traitement de l'information 60 du récepteur.

Selon un mode de réalisation, le dispositif numérique de traitement de signaux 50 contient au moins un microprocesseur.

Selon un mode de réalisation le dispositif numérique de traitement de signaux 50 peut être inséré dans un ordinateur ou tout autre dispositif de calcul.

Selon un mode particulier de réalisation deux signaux de référence sont utilisés, le premier signal référence numérique Ref1n et le signal référence modifié numérique Ref2n.

Selon ce mode de réalisation un troisième module de conversion analogique numérique 403 fournit le signal modifié numérique Ref2n.

Selon ce mode de réalisation le dispositif de traitement numérique des signaux minimise la quantité $R2n'' = R2n - \overline{Ref1n}^T.a1 - \overline{Ref2n}^T.a2$.

Par exemple la quantité à minimiser peut être l'espérance mathématique de $\|R2n - \overline{Ref1n}^T.\overline{a_1} - \overline{Ref2n}^T.\overline{a_2}\|^2$. Chacun des termes du vecteur $\overline{Ref1n}$ représente le premier signal référence numérique avec un décalage temporel numérique donné. Pour chacun des termes successifs du vecteur $\overline{Ref1n}$ le décalage temporel correspondant est supérieur à celui du terme précédent. Les termes du vecteur $\overline{a_1}$ ont le rôle de paramètres d'ajustement. La quantité $\overline{Ref1n}^T.\overline{a_1}$, est donc le premier signal référence numérique passé à travers un filtre numérique dont les coefficients sont les termes du vecteur $\overline{a_1}$. Il faut noter qu'il peut n'y avoir qu'un seul terme dans le vecteur $\overline{Ref1n}$. Chacun des termes du vecteur $\overline{Ref2n}$ représente le signal référence modifié numérique avec un décalage temporel numérique donné.. Pour chacun des termes successifs du vecteur $\overline{Ref2n}$ le décalage temporel correspondant est supérieur à celui du terme précédent. Les termes du vecteur $\overline{a_2}$ ont le rôle de paramètres d'ajustement. La quantité $\overline{Ref1n}^T.\overline{a_2}$ est donc le signal référence modifié numérique passé à travers un filtre numérique dont les coefficients sont les termes du vecteur $\overline{a_2}$. Il faut noter qu'il peut n'y avoir qu'un seul terme dans le vecteur $\overline{Ref2n}$.

Selon un mode de réalisation particulier les valeurs des paramètres $\overline{a1}$ et $\overline{a2}$ peuvent être déterminées au moyen d'une procédure itérative de minimisation de la quantité $R2n''(t)$.

Il est aussi possible de concaténer les vecteurs $\overline{a1}, \overline{a2}$ dans le vecteur $\overline{a}$ et les vecteurs $\overline{Ref1n}, \overline{Ref2n}$ dans le vecteur $\overline{Ref2n}$ et de réécrire la quantité $R2n'' = R2n - \overline{Refn}^T.\overline{a}$.

Le signal $R2n''$ représente le signal résultant numérique Run qui est une approximation du signal utile numérisé. Le signal résultant numérique Run est le signal envoyé à un équipement de traitement des informations 60 du récepteur RE.

Un autre objet de la présente invention est un procédé 100 de mise en œuvre du dispositif 1 pour la réduction de l'intensité d'un signal interférant dans un signal reçu. Le procédé 100 est illustré à la figure 5.

La première étape du procédé 100 est le prélèvement PRE-Ref1 d'un signal référence Ref1 à partir du signal interférant I émis par l'émetteur EM.

Cette étape est réalisée à l'aide par exemple du coupleur 10 placé après la chaîne d'amplification de l'émetteur EM.

Avantageusement, cette étape permet d'inclure dans le signal Ref1 le bruit large bande généré par l'émetteur EM.

La deuxième étape du procédé 100 est la modification MOD-Ref1 des propriétés du premier signal référence Ref1 à l'aide d'un circuit analogique 20 pour obtenir un signal référence modifié Ref2, ledit signal référence modifié Ref2 étant adapté pour compenser le signal interférant I émis par l'émetteur et présent dans le signal reçu R par le récepteur RE.

Cette étape permet de préparer le signal référence modifié Ref2, utilisé pour compenser le signal interférant présent dans le signal reçu.

Selon un mode de réalisation particulier de l'étape MOD-Ref1, les propriétés du signal référence modifié Ref2 sont déterminées par la boucle de contrôle 25 de la figure 2

Avantageusement la boucle de contrôle 25 mesure le niveau du signal interférant dans le signal reçu.

Toujours dans la figure 2, la boucle de contrôle 25 modifie, dans le bloc 20, la phase, le décalage temporel et l'amplitude du signal référence modifié afin de réduire l'intensité du signal interférant dans le signal combiné R2.

L'étape CORR1 du procédé 100 selon l'invention comprend la combinaison analogique du signal référence modifié Ref2 et du signal reçu R par le récepteur pour obtenir le signal combiné R2.

Avantageusement, cette étape constitue la correction analogique appliquée au signal reçu R et délivre le signal combiné R2.

Par exemple si le signal référence modifié est la copie du signal interférant I, avec une amplitude proche de celle de l'interférence telle que vue dans le signal reçu R et avec un déphasage proche de 180° par rapport à l'interférence telle que vue dans le signal reçu R, en sommant le signal reçu R et le signal référence modifié Ref2 l'intensité du signal interférant I présent dans R est sensiblement réduite dans le signal combiné R2.

Les étapes NUM-R2 et CORR2 permettent d'appliquer une deuxième correction numérique au signal combiné R2.

L'étape NUM-R2 comprend la conversion analogique numérique du signal combiné R2 pour obtenir le signal combiné numérique R2n. La conversion numérique est effectuée à l'aide du module de conversion analogique numérique 402.

L'étape CORR2 est réalisée à l'aide d'un dispositif numérique de traitement des signaux et comprend la combinaison numérique d'un signal référence numérique, comprenant au moins le premier signal référence numérique Ref1n, et du signal combiné numérique R2n, afin de minimiser l'intensité du signal interférant I dans le signal combiné numérique R2n.

L'étape CORR2 représente l'application de la deuxième correction au signal combiné R2n. Cette deuxième correction est une correction numérique.

Selon un mode de réalisation particulier, le signal référence numérique est le premier signal référence numérique, le premier signal référence étant numérisé au cours de l'étape NUMRef1 du procédé 100.

Selon un mode de réalisation, le procédé 100 comporte une étape NUM-Ref2 de numérisation du signal référence modifié Ref2 pour obtenir le signal référence modifié numérique Ref2n.

Selon un autre mode de réalisation deux signaux référence sont utilisés, le premier signal référence numérique

Ref1n et le signal référence modifié numérique Ref2n.

Avantageusement le signal numérique Ref2n permet de prendre en compte les distorsions introduites par le circuit de traitement analogique 20 et de mettre en œuvre une correction numérique plus efficace.

Selon un mode de réalisation l'étape CORR2 est réalisée à l'aide de la minimisation de l'écart $R2n - \overline{Ref1n^T}.\overline{a}$, le vecteur $\overline{a}$ représentant les paramètres d'ajustement.

Selon un mode de réalisation, au cours de l'étape CORR2 du procédé 100 la quantité minimisée est l'espérance mathématique de :

$$\left\| R2n - \overline{Ref1n^T}.\overline{a} \right\|^2$$

Avantageusement, ce mode de réalisation permet de trouver une combinaison de R2n et Refn optimale pour l'extraction du signal utile Ru et donc d'optimiser l'application de la correction numérique.

Selon un autre mode de réalisation l'étape CORR2 est réalisée à l'aide de la minimisation de l'écart :

$$R2n'' = R2n - \overline{Ref1n^T}.\overline{a1} - \overline{Ref2n^T}.\overline{a2}.$$

Selon un mode de réalisation, au cours de l'étape CORR2 du procédé 100 la quantité minimisée est l'espérance mathématique de

$$\left\| R2n - \overline{Ref1n^T}.\overline{a_1} - \overline{Ref2n^T}.\overline{a_2} \right\|^2$$

Avantageusement, ce mode de réalisation permet de trouver une combinaison de R2n, Ref1n et Ref2n optimale pour l'extraction du signal utile Ru et donc d'optimiser l'application de la correction numérique.

Avantageusement, le filtrage numérique appliqué au signal Ref1 n et correspondant au terme $\overline{Ref1n^T}.\overline{a_1}$, respectivement le filtrage numérique appliqué au signal Ref2n et correspondant au terme $\overline{Ref2n^T}.\overline{a_2}$, permet de corriger des décalages temporels résiduels entre l'interférence résiduelle telle qu'elle est vue dans le signal combiné R2n et le premier signal de référence numérique Ref1 n, respectivement le signal référence modifié numérique ref2n. Il permet également de prendre en compte et de corriger l'effet de trajets multiples de propagation entre les antennes.

En sortie de l'étape CORR2 le signal résultant est envoyé à un module de traitement des informations 60 du récepteur RE.

Un exemple de l'application de la correction numérique selon l'invention est illustré à la figure 6b. La figure 6b montre le signal interférant I tel qu'il est vu dans le signal combiné R2 donc à l'entrée de la correction numérique (« Signal interférant d'origine »), le signal interférant résiduel après correction numérique et présent dans le signal résultant Ru (« Signal interférant résiduel »), et le signal utile présent dans le signal résultant Ru (« Signal utile »).

La partie de gauche montre le « signal interférant résiduel » après quelques itérations de la correction numérique. La figure de droite montre le « signal interférant résiduel » après convergence de la correction numérique.

La figure 6b représente l'application de la correction numérique en utilisant une procédure itérative mise en œuvre par le dispositif numérique de traitement des signaux 50. Il est évident qu'après convergence, le signal utile dans la bande de fréquence du récepteur est réduit par rapport à la situation de départ et par rapport à celle après seulement quelques itérations. De plus, dans la bande de fréquence du récepteur, le niveau de signal interférant est réduit au niveau du bruit thermique présent dans le signal reçu R.

Selon un mode de réalisation le procédé 100 selon l'invention comprend en outre une étape de filtrage numérique appliquée avant le traitement de correction numérique 50 du premier signal référence numérique Ref1n, du signal de référence modifié numérique Ref2n, si celui-ci est utilisé, et du signal combiné numérique R2n afin de sélectionner la gamme fréquentielle qui correspond à la bande de réception du récepteur RE.

Avantageusement, cette étape permet de limiter l'application de la correction numérique à la bande de réception du signal utile.

L'invention porte également sur un terminal ou équipement d'émission/réception d'un signal radio comprenant au moins une antenne d'émission reliée à un équipement émetteur et une antenne de réception reliée à un équipement récepteur, ledit équipement d'émission/réception étant caractérisé en ce qu'il comprend le dispositif de réduction de l'intensité 1 d'un signal interférant.

Un autre objet de l'invention est un terminal ou équipement d'émission/réception d'un signal radio comprenant une antenne reliée à la fois à un équipement émetteur et à un équipement récepteur, ledit équipement étant caractérisé en ce qu'il comprend un dispositif 1 de réduction de l'intensité d'un signal interférant.

**Revendications**

1. Dispositif (1) de traitement d'un signal reçu (R) par un récepteur (RE) perturbé par un émetteur (EM), lesdits émetteurs (EM) et récepteur (RE) étant co-localisés, ledit dispositif (1) étant **caractérisé en ce qu'**il comprend :

   • un premier coupleur (10) configuré pour prélever un premier signal référence (Ref1) à partir d'un signal interférant (I) émis par l'émetteur,
   • un circuit analogique de traitement (20) du premier signal référence (Ref1) configuré pour délivrer un signal référence modifié (Ref2), ledit circuit analogique de traitement (20) configuré pour modifier l'un au moins des paramètres parmi lesquels : l'amplitude et/ou la phase et/ou le décalage temporel du premier signal référence (Ref1), le signal référence modifié (Ref2) étant adapté pour compenser le signal interférant (I) émis par l'émetteur et présent dans le signal reçu (R) par le récepteur ;
   • un second coupleur (40) configuré pour combiner le signal référence modifié (Ref2) avec le signal reçu (R) par une antenne du récepteur et délivrant le signal combiné (R2) à un deuxième module de conversion analogique numérique (402);
   • un premier module de conversion analogique numérique (401) configuré pour numériser le premier signal référence (Ref1) afin de délivrer à un dispositif numérique de traitement des signaux (50) un premier signal de référence numérique (Ref1n), ledit dispositif numérique de traitement des signaux (50) étant inclus dans le dispositif (1) de traitement d'un signal reçu ;
   • le deuxième module de conversion analogique numérique (402) configuré pour numériser le signal combiné (R2) afin de délivrer un signal combiné numérique (R2n) au dispositif numérique de traitement des signaux (50), le dispositif de traitement de signaux (50) combinant le signal combiné numérique (R2n) et au moins le premier signal référence numérique (Ref1n) afin de réduire l'intensité du signal interférant (I) présent dans le signal combiné numérique (R2n), ledit dispositif de traitement des signaux (50) délivrant un signal résultant numérique (Run) à un module de traitement de l'information (60) de l'équipement récepteur (RE).

2. Dispositif (1) selon la revendication précédente **caractérisé en ce qu'**il comprend un troisième module de conversion analogique numérique (403) configuré pour numériser le signal référence modifié (Ref2) afin de délivrer au dispositif numérique de traitement des signaux (50) un signal référence modifié numérique (Ref2n), ledit signal référence modifié (Ref2) étant prélevé après le circuit de traitement analogique (20), le dispositif de traitement de signaux (50) combinant le signal combiné numérique (R2n) et deux signaux référence numériques, le premier signal référence numérique (Ref1n) et le signal référence modifié numérique (Ref2n) afin de réduire l'intensité du signal interférant (I) présent dans le signal combiné numérique (R2n), ledit dispositif de traitement des signaux (50) délivrant un signal résultant numérique (Run) à un module de traitement de l'information (60) de l'équipement récepteur (RE).

3. Dispositif (1) selon la revendication 1 ou la revendication 2 **caractérisé en ce que** le récepteur est un récepteur de type bande étroite dont la largeur de bande est inférieure à 10MHz.

4. Dispositif (1) selon l'une quelconque des revendications précédentes **caractérisé en ce qu'**au moins un module de conversion analogique numérique (401, 402, 403) comprend au moins un des éléments suivants : un oscillateur local (LO), un mélangeur (IQM) pour la décomposition du signal en entrée en bande de base, un filtre passe bas (LPF) pour éliminer la fréquence image, un convertisseur analogique numérique (ADC) pour fournir la version numérique des composantes en bande de base du signal en entrée.

5. Dispositif (1) selon l'une quelconque des revendications précédentes **caractérisé en ce que** le circuit de traitement analogique (20) comprend au moins un déphaseur variable et un gain variable pour la génération du signal référence modifié (Ref2).

6. Dispositif (1) selon la revendication précédente **caractérisé en ce que** le circuit de traitement analogique (20) comprend en outre un circuit à retard fixe et/ou un circuit à retard paramétrable pour la génération du signal référence modifié (Ref2).

7. Dispositif (1) selon l'une quelconque des revendications précédentes **caractérisé en ce que** le dispositif numérique de traitement de signaux (50) comprend au moins un processeur ou d'autres moyens de calcul.

8. Procédé (100) de mise en œuvre du dispositif selon l'une quelconque des revendications 1 à 7, ledit procédé (100) comportant les étapes suivantes :

• prélèvement (PRE-Ref1) d'un premier signal référence (Ref1) à partir du signal interférant (I) émis par l'émetteur (EM) ;
• modification (MOD-Ref1) des propriétés du signal référence (Ref1) à l'aide d'un circuit analogique (20) pour obtenir un signal référence modifié (Ref2), ledit signal référence modifié (Ref2) étant adapté pour compenser le signal interférant (I) émis par l'émetteur et présent dans le signal reçu (R) par le récepteur (RE) ;
• combinaison (CORR1) du signal référence modifié (Ref2) et du signal reçu (R) par le récepteur pour obtenir le signal combiné (R2);
• conversion analogique numérique (NUMR2) du signal combiné (R2) pour obtenir le signal combiné numérique (R2n) ;
• conversion analogique numérique (NUM-REF1) du premier signal référence (Ref1) pour obtenir un premier signal référence numérique (Ref1 n), ledit premier signal référence (Ref1) étant prélevé après une chaîne d'amplification reliée à une antenne de l'émetteur ;
• combinaison (CORR2) à l'aide du dispositif de traitement des signaux (50) du signal combiné numérique (R2n) et d'au moins le premier signal référence numérique (Ref1n) afin d'éliminer le signal interférant (I) présent dans le signal combiné numérique (R2n) ;
• envoi (160) du signal résultant numérique (Run) à un module de traitement de l'information (60) de l'équipement récepteur (RE).

9. Procédé (100) selon la revendication 8 pour la mise en œuvre du dispositif selon la revendication 2 et l'une quelconque des revendications 3 à 7 **caractérisé en ce qu'**il comprend une étape de conversion analogique numérique (NUM-Ref2) du signal référence modifié (Ref2) pour obtenir un signal référence modifié numérique (Ref2n), ledit signal référence modifié (Ref2) étant prélevé après le circuit de traitement analogique (20), la combinaison numérique (150) à l'aide du dispositif de traitement des signaux (50) du signal combiné numérique (R2n), du premier signal référence numérique (Ref1n) et du signal référence modifié numérique (Ref2n) étant réalisée afin d'éliminer le signal interférant (I) présent dans le signal combiné numérique (R2n).

10. Procédé (100) selon la revendication 8 **caractérisé en ce que** l'étape (CORR2) de combinaison à l'aide du dispositif de traitement des signaux (50) du signal combiné numérique (R2n) et du premier signal référence numérique (Ref1n) afin d'éliminer le signal interférant (I) présent dans le signal combiné numérique (R2n) comprend la minimisation itérative de l'écart entre le signal combiné numérique (R2n) et le premier signal référence numérique (Ref1n) afin d'envoyer le signal résultant numérique (Run) à un module de traitement de l'information (60) de l'équipement récepteur (RE), l'écart à minimiser étant de la forme $R2n - \overline{Ref1n}^T.\overline{a}$, chacun des termes du vecteur $\overline{Ref1n}$ représentant le premier signal référence numérique avec un décalage temporel numérique donné, les termes du vecteur $\overline{a}$ ayant le rôle de paramètres d'ajustement.

11. Procédé (100) selon la revendication 9 **caractérisé en ce que** l'étape (CORR2) de combinaison à l'aide du dispositif de traitement des signaux (50) du signal combiné numérique (R2n), du premier signal référence numérique (Ref1n) et du signal référence modifié numérique (Ref2n) afin d'éliminer le signal interférant (I) présent dans le signal combiné numérique (R2n) comprend la minimisation itérative de l'écart entre le signal somme numérique (R2n), le premier signal référence numérique (Ref1n) et le signal référence modifié numérique (Ref2n) afin d'envoyer le signal résultant numérique (Run) à un module de traitement de l'information (60) de l'équipement récepteur (RE), l'écart à minimiser étant de la forme $R2n'' = R2n - \overline{Ref1n}^T.\overline{a1} - \overline{Ref2n}^T.\overline{a2}$, chacun des termes du vecteur $\overline{Ref1n}$ représentant le premier signal référence numérique avec un décalage temporel numérique donné, les termes du vecteur $\overline{a_1}$ ayant le rôle de paramètres d'ajustement, chacun des termes du vecteur $\overline{Ref2n}$ représentant le signal référence modifié numérique avec un décalage temporel numérique donné, les termes du vecteur $\overline{a_2}$ ayant le rôle de paramètres d'ajustement.

12. Procédé (100) selon l'une quelconque des deux revendications précédentes **caractérisé en ce que** la minimisation itérative de l'écart entre le signal combiné numérique et au moins un signal référence numérique est réalisée à l'aide d'un algorithme de type gradient stochastique.

13. Procédé (100) selon l'une quelconque des revendications 8 à 12 **caractérisé en ce que** les étapes de conversion analogique numériques fournissent une représentation numérique des signaux en bande de base.

14. Procédé (100) selon l'une quelconque des revendications 8 à 13 **caractérisé en ce qu'**il comprend une étape de filtrage numérique, appliquée avant le dispositif de traitement numérique des signaux (50), du premier signal référence numérique (Ref1 n), du signal de référence modifié numérique (Ref2n) et du signal combiné numérique (R2n)

afin de sélectionner la gamme fréquentielle qui correspond à la bande de réception du récepteur (RE).

15. Système d'émission/réception d'un signal radio comprenant au moins une antenne d'émission reliée à un équipement émetteur et une antenne de réception reliée à un équipement récepteur, ledit équipement d'émission/réception étant **caractérisé en ce qu'**il comprend le dispositif (1) de réduction de l'intensité d'un signal interférant selon les revendications 1 à 7.

16. Equipement d'émission/réception d'un signal radio comprenant une antenne reliée à la fois à un équipement émetteur et à un équipement récepteur, ledit équipement étant **caractérisé en ce qu'**il comprend un dispositif (1) de réduction de l'intensité d'un signal interférant selon les revendications 1 à 7.

**Patentansprüche**

1. Verarbeitungsvorrichtung (1) eines Signal, das von einem Empfänger (RE) empfangen (R) ist, der von einem Sender (EM) gestört ist, wobei der genannte Sender (EM) und Empfänger (RE) ko-lokalisiert sind, wobei die genannte Vorrichtung (1) **dadurch gekennzeichnet ist, dass** sie umfasst:

   • einen ersten Koppler (10), der zum Entnehmen eines ersten Referenzsignals (Ref1) ausgehend von einem Interferenzsignal (I) ausgestaltet ist, das vom Sender ausgegeben ist,
   • einen analogen Verarbeitungsschaltkreis (20) des ersten Referenzsignals (Ref. 1), der ausgestaltet ist, um ein modifiziertes Referenzsignal (Ref2) zu liefern, wobei der genannte analoge Verarbeitungsschaltkreis (20) ausgestaltet ist, um wenigstens einen der Parameter zu modifizieren, darunter: die Amplitude und / oder die Phase und / oder die vorübergehende Verschiebung des ersten Referenzsignals (Ref1), wobei das modifizierte Referenzsignal (Ref2) geeignet ist, um das Interferenzsignal (I) auszugleichen, das vom Sender ausgegeben ist und in dem vom Empfänger empfangenen (R) Signal vorhanden ist;
   • einen zweiten Koppler (430), der zum Kombinieren des modifizierten Referenzsignals (Ref2) mit dem Signal, das von einer Antenne des Empfängers empfangen (R) ist und das kombinierte Signal (R2) an ein zweites analoges / digitales Umwandlungsmodul (402) ausgibt;
   • ein erstes analoges / digitales Umwandlungsmodul (401), das zum Digitalisieren des ersten Referenzsignals (Ref1) ausgestaltet ist, um einer digitalen Vorrichtung zur Verarbeitung der Daten (50) ein erstes digitales Referenzsignal (Ref1n) zu liefern, wobei die genannte digitale Verarbeitungsvorrichtung der Signale (50) in der Vorrichtung (1) zur Verarbeitung eines empfangenen Signals enthalten ist;
   • das zweite analoge / digitale Umwandlungsmodul (402), das zum Digitalisieren des kombinierten Signals (R2) ausgestaltet ist, um ein kombiniertes, digitales Signal (R2n) an die digitale Vorrichtung zur Verarbeitung der Signale (50) auszugeben, wobei die Vorrichtung zur Verarbeitung von Signalen (50) das kombinierte digitale Signal (R2n) und wenigstens das erste digitale Referenzsignal (Ref1n) kombiniert, um die Intensität des Interferenzsignals (I) zu mindern, das in dem kombinierten digitalen Signal (R2n) vorhanden ist, wobei die genannte Verarbeitungsvorrichtung von Signalen (50) ein resultierendes digitales Signal (Run) an ein Verarbeitungsmodul der Information (60) der Empfängerausrüstung (RE) ausgibt.

2. Vorrichtung (1) gemäß dem voranstehenden Anspruch, **dadurch gekennzeichnet, dass** sie ein drittes analoges / digitales Umwandlungsmodul (403) umfasst, das zum Digitalisieren des modifizierten Referenzsignals (Ref2) ausgestaltet ist, um der digitalen Verarbeitungsvorrichtung der Signale (50) ein digitales modifiziertes Referenzsignal (Ref2) zu liefern, wobei das genannte modifizierte Referenzsignal (Ref2) nach dem analogen Verarbeitungsschaltkreis (20) entnommen ist, wobei die Verarbeitungsvorrichtung von Signalen (50) das digitale kombinierte Signal (R2n) und zwei digitale Referenzsignale, das erste digitale Referenzsignal (Ref1n) und das digitale modifizierte Referenzsignal (Ref2n) kombiniert, um die Intensität des Interferenzsignal (I) zu mindern, das in dem kombinierten digitalen Signal (R2n) vorhanden ist, wobei die genannten Verarbeitungsvorrichtung der Signale (50) ein resultierendes digitales Signal (Run) an ein Verarbeitungsmodul der Information (60) der Empfängerausrüstung (RE) ausgibt.

3. Vorrichtung (1) gemäß Anspruch 1 oder Anspruch 2, **dadurch gekennzeichnet, dass** der Empfänger ein Empfänger vom Typ Schmalband ist, dessen Bandbreite geringer ist als 10 MHz.

4. Vorrichtung (1) gemäß irgendeinem der voranstehenden Ansprüche, **dadurch gekennzeichnet, dass** wenigstens ein analoges / digitales Umwandlungsmodul (401, 402, 403) wenigstens eines der folgenden Elemente umfasst: einen lokalen Oszillator (LO), einen Mischer (IQM) für die Zerlegung des Signals am Eingang des Basisbandes, einen Bandpassfilter (LPF) zum Ausschalten der Bildfrequenz, einen analogen / digitalen Wandler (ADC) zum Liefern der digitalen Version der Bestandteile im Basisband des Signals am Eingang.

5. Vorrichtung (1) gemäß irgendeinem der voranstehenden Ansprüche, **dadurch gekennzeichnet, dass** der analoge Verarbeitungsschaltkreis (20) wenigstens einen variablen Phasenverschieber zum Erzeugen des modifizierten Referenzsignals (Ref2) umfasst.

6. Vorrichtung (1) gemäß dem voranstehenden Anspruch, **dadurch gekennzeichnet, dass** der analoge Verarbeitungsschaltkreis (20) darüber hinaus eine feste Verzögerungsschaltung und / oder eine parametrierbare Verzögerungsschaltung zum Erzeugen des modifizierten Referenzsignals (Ref2) umfasst.

7. Vorrichtung (1) gemäß irgendeinem der voranstehenden Ansprüche, **dadurch gekennzeichnet, dass** die digitale Verarbeitungsvorrichtung von Signalen (50) wenigstens einen Prozessor oder sonstige Berechnungsmittel umfasst.

8. Verfahren (100) zum Umsetzen der Vorrichtung gemäß irgendeinem der Ansprüche 1 bis 7, wobei das genannte Verfahren (100) die folgenden Schritte umfasst:

   • Entnahme (PRE-Ref1) eines ersten Referenzsignals (Ref1), ausgehend von dem Interferenzsignal (I), das von dem Sender (EM) ausgegeben ist;
   • Änderung (MOD-Ref1) der Eigenschaften des Referenzsignals (Ref1) mithilfe eines analogen Schaltkreises (20) zum Erhalten eines modifizierten Referenzsignals (Ref2), wobei das genannte modifizierte Referenzsignal (Ref2) zum Ausgleichen des Interferenzsignals (I) geeignet ist, das vom Sender ausgegeben und in dem vom Empfänger (RE) empfangenen (R) Signal vorhanden ist;
   • Kombination (CORR1) des modifizierten Referenzsignals (Ref2) und des vom Empfänger empfangenen (R) Signals, um das kombinierte Signal (R2) zu erhalten;
   • analoge / digitale Umwandlung (NUMR2) des kombinierten Signals (R2) zum Erhalten des kombinierten digitalen Signals (R2n);
   • analoge / digitale Umwandlung (NUM-REF1) des ersten Referenzsignal (Ref$_1$) zum Erhalten eines ersten digitalen Referenzsignals (Ref1 n), wobei das genannte erste Referenzsignal (Ref1) nach einer Verstärkungskette abgenommen ist, die an eine Antenne des Senders angeschlossen ist;
   • Kombination (CORR2) mithilfe der Verarbeitungsvorrichtung der Signale (50) des digitalen kombinierten Signals (R2n) und wenigstens des ersten digitalen Referenzsignals (Ref1 n) zum Ausschalten des Interferenzsignals (I), das in dem kombinierten digitalen Signal (R2n) vorhanden ist;
   • Versand (160) des resultierenden digitalen Signals (Run) an ein Modul zur Verarbeitung der Information (60) der Empfängerausrüstung (RE).

9. Verfahren (100) gemäß Anspruch 8 zum Umsetzen der Vorrichtung gemäß Anspruch 2 und irgendeinem der Ansprüche 3 bis 7, **dadurch gekennzeichnet, dass** es einen analogen / digitalen Umwandlungsschritt (NUM-Ref2) des modifizierten Referenzsignals (Ref2) umfasst, um ein digitales modifiziertes Referenzsignal (Ref2n) zu erhalten, wobei das genannte modifizierte Referenzsignal (Ref2) nach dem analogen Verarbeitungsschaltkreis (20) entnommen ist, wobei die digitale Kombination (150) mithilfe der Verarbeitungsvorrichtung der Signale (50) des kombinierten digitalen Signals (R2n), des ersten digitalen Referenzsignals (Ref1n) und des modifizierten digitalen Referenzsignals (Ref2n) realisiert ist, um das Interferenzsignal (I) auszuschalten, das in dem kombinierten digitalen Signal (R2n) vorhanden ist.

10. Verfahren (100) gemäß Anspruch 8, **dadurch gekennzeichnet, dass** der Kombinationsschritt (CORR2) mithilfe der Verarbeitungsvorrichtung der Signale (50) des kombinierten digitalen Signals (R2n) und des ersten digitalen Referenzsignals (Ref1n) zum Ausschalten des Interferenzsignals (I), das in dem kombinierten digitalen Signal (R2n) vorhanden ist, die iterative Minimierung des Abstandes zwischen dem kombinierten digitalen Signal (R2n) und dem ersten digitalen Referenzsignal (Ref1n) umfasst, um das resultierende digitale Signal (Run) an ein Verarbeitungsmodul der Information (60) der Empfängerausrüstung (RE) zu senden, wobei der zu minimierende Abstand die Form $R2n - \overline{Ref1n}^{T}.\overline{a}$ aufweist, wobei jedes Element des Vektors $\overline{Ref1n}$ das erste digitale Referenzsignal mit einer bestimmten digitalen, vorübergehenden Verschiebung darstellt, wobei die Elemente des Vektors $\overline{a}$ die Rolle von Anpassungsparametern aufweisen.

11. Verfahren (100) gemäß Anspruch 9, **dadurch gekennzeichnet, dass** der Kombinationsschritt (CORR2) mithilfe der Verarbeitungsvorrichtung der Signale (50) des kombinierten digitalen Signals (R2n), des ersten digitalen Referenzsignals (Ref1n) und des digitalen, modifizierten Referenzsignals (Ref2n) zum Ausschalten des Interferenzsignals (I), das in dem kombinierten digitalen Signal (R2n) vorhanden ist, die iterative Minimierung des Abstandes zwischen dem digitalen Summensignal (R2n), dem ersten digitalen Referenzsignal (Ref1n) und dem modifizierten, digitalen Referenzsignal (Ref2n) zum Versenden des resultierenden digitalen Signals (Run) an ein Verarbeitungsmodul der Information (60) der Empfängergleichung (RE) umfasst, wobei der zu minimierende Abstand die Form $R2n'' = R2n - \overline{Ref1n}^T.\overline{a1} - \overline{Ref2n}^T.\overline{a2}$, aufweist, wobei jedes Element des Vektors $\overline{Ref1n}$ das erste digitale Referenzsignal mit einer bestimmten, digitalen, zeitlichen Verschiebung aufweist, wobei die Elemente des Vektors $\overline{a}_1$ die Rolle von Anpassungsparametern spielen, wobei jedes Element des Vektors $\overline{Ref2n}$ das modifizierte digitale Referenzsignal mit einer bestimmten digitalen, zeitlichen Verschiebung darstellt, wobei die Elemente des Vektors $\overline{a}_2$ die Rolle von Anpassungsparametern spielen.

12. Verfahren (100) gemäß irgendeinem der zwei voranstehenden Ansprüche, **dadurch gekennzeichnet, dass** die iterative Minimierung des Abstandes zwischen dem kombinierten digitalen Signal und wenigstens einem digitalen Referenzsignal mithilfe eines Algorithmus vom Typ stochastischer Gradient realisiert ist.

13. Verfahren (100) gemäß irgendeinem der Ansprüche 8 bis 12, **dadurch gekennzeichnet, dass** die analogen / digitalen Umwandlungsschritte eine digitale Darstellung der Signale im Basisband liefern.

14. Verfahren (100) gemäß irgendeinem der Ansprüche 8 bis 13, **dadurch gekennzeichnet, dass** es einen digitalen Filterschritt umfasst, der vor der digitalen Verarbeitungsvorrichtung der Signale (50), dem ersten digitalen Referenzsignal (Ref1n), dem modifizierten digitalen Referenzsignal (Ref2n) und dem kombinierten digitalen Signal (R2n) angewendet ist, um den Frequenzbereich auszuwählen, der dem Empfangsband des Empfängers (RE) entspricht.

15. Sende- / Empfangssystem eines Funksignals, umfassend wenigstens eine Sendeantenne, die mit einer Senderausrüstung verbunden ist, und eine Empfangsantenne, die mit einer Empfängerausrüstung verbunden ist, wobei die genannte Sende- / Empfangsausrüstung **dadurch gekennzeichnet ist, dass** sie die Vorrichtung (1) zum Mindern der Intensität eines Interferenzsignals gemäß den Ansprüchen 1 bis 7 umfasst.

16. Sende- / Empfangsausrüstung eines Funksignals, umfassend eine Antenne, die gleichzeitig mit einer Senderausrüstung und einer Empfängerausrüstung verbunden ist, wobei die genannte Ausrüstung **dadurch gekennzeichnet ist, dass** sie eine Vorrichtung (1) zum Mindern der Intensität eines Interferenzsignals gemäß den Ansprüchen 1 bis 7 umfasst.

## Claims

1. Device (1) for processing a signal (R) received by a receiver (RE) disrupted by a transmitter (EM), where said transmitters (EM) and receiver (RE) are co-located, where said device (1) is **characterised by** the fact that it includes:

    • a first coupler (10) configured to take a first reference signal (Ref1) from an interfering signal (I) transmitted by the transmitter;
    • an analogue circuit (20) to process the first reference signal (Ref1) configured to deliver a modified reference signal (Ref2), where the analogue processing circuit (20) is configured to modify at least one of the parameters, including: the amplitude and/or phase and/or time lag of the first reference signal (Ref1), where the modified reference signal (Ref2) is able to compensate for the interfering signal (I) transmitted by the transmitter present in the signal (R) received by the receiver;
    • a second coupler (40) configured to combine the modified reference signal (Ref2) with the signal (R) received by an antenna of the receiver, delivering the combined signal (R2) to a second analogue-to-digital conversion module (402);
    • a first analogue-to-digital conversion module (401) configured to digitise the first reference signal (Ref1) in order to deliver to a signal-processing digital device (50) a first digital reference signal (Ref1n), said signal-processing digital device (50) being comprised in the device (1) for processing a signal received;
    • the second analogue-to-digital conversion module (402) being configures to digitise the combined signal (R2) in order to deliver a digital combined signal (R2n) to the digital signal-processing device (50), where the signal-processing device (50) combines the digital combined signal (R2n) and at least the first digital reference signal (Ref1n) in order to reduce the intensity of the interfering signal (I) present in the digital combined signal (R2n), where said signal-processing device (50) delivers a resulting digital signal (Run) to a data-processing module (60) of the receiver device (RE).

2. Device (1) according to the previous claim, **characterised by** the fact that it includes a third analogue-to-digital conversion module (403) being configured to digitise the modified reference signal (Ref2) in order to deliver a digital modified reference signal (Ref2n) to the digital signal-processing device (50), where said modified reference signal (Ref2) is taken after the analogue processing circuit (20), where the signal-processing device (50) combines the digital combined signal (R2n) and two digital reference signals, the first digital reference signal (Ref1n) and the digital modified reference signal (Ref2n), in order to reduce the intensity of the interfering signal (I) present in the digital combined signal (R2n), where said signal-processing device (50) delivers a resulting digital signal (Run) to a data-processing module (60) of the receiver device (RE).

3. Device (1) according to claim 1 or claim 2, **characterised by** the fact that the receiver is a receiver of the narrow-band type the bandwidth of which is less than 10 MHz.

4. Device (1) according to any of the previous claims, **characterised by** the fact that at least one analogue-to-digital conversion module (401, 402, 403) includes at least one of the following elements: a local oscillator (LO), a mixer (IQM) to split the incoming signal into basebands, a low-pass filter (LPF) to eliminate the image frequency, and an analogue-to-digital converter (ADC) to provide the digital version of the baseband components of the incoming signal.

5. Device (1) according to any of the previous claims, **characterised by** the fact that the analogue processing circuit (20) includes at least one variable phase splitter and a variable gain to generate the modified reference signal (Ref2).

6. Device (1) according to the previous claim, **characterised by** the fact that the analogue processing circuit (20) also contains a fixed delay circuit and/or a configurable delay circuit to generate the modified reference signal (Ref2).

7. Device (1) according to any of the previous claims, **characterised by** the fact that the digital signal-processing device (50) includes at least one processor or other computation means.

8. Method (100) for implementation of the device according to any of claims 1 to 7, where the said method (100) includes the following steps:

   • taking (PRE-Ref1) of a first reference signal (Ref1) from an interfering signal (I) transmitted by the transmitter (EM);
   • modification (MOD-Ref1) of the properties of the first reference signal (Ref1) using an analogue circuit (20), to obtain a modified reference signal (Ref2), where said modified reference signal (Ref2) is able to compensate for the interfering signal (I) transmitted by the transmitter which is present in the signal (R) received by the receiver (RE);
   • combination (CORR1) of the modified reference signal (Ref2) and of the signal (R) received by the receiver to obtain the combined signal (R2);
   • analogue-to-digital conversion (NUMR2) of the combined signal (R2) to obtain the digital combined signal (R2n);
   • analogue-to-digital conversion (NUM-REF1) of the first reference signal (Ref1) to obtain a first digital reference signal (Ref1n), where said first reference signal (Ref1) is taken after the amplification chain connected to the transmitter's antenna;
   • combination (CORR2) using the signal-processing device (50) of the digital combined signal (R2n) and of at least the first digital reference signal (Ref1 n) in order to eliminate the interfering signal (I) present in the digital combined signal (R2n);
   • transmission (160) of the digital resulting signal (Run) to a data-processing module (60) of the receiver device (RE).

9. Method (100) according to claim 8 for implementation of the device according to claim 2 and any of claims 3 to 7, **characterised by** the fact that it includes a step of analogue-to-digital conversion (NUM-Ref2) of the modified reference signal (Ref2) to obtain a digital modified reference signal (Ref2n), where said modified reference signal (Ref2) is taken after the analogue processing circuit (20), where the digital combination (150), using the signal-processing device (50), of the digital combined signal (R2n), of the first digital reference signal (Ref1n) and of the modified reference signal (Ref2n) is accomplished in order to eliminate the interfering signal (I) present in the digital combined signal (R2n);

10. Method (100) according to claim 8 **characterised by** the fact that the step (CORR2) of combination using the signal-processing device (50) of the digital combined signal (R2n) and of the first digital reference signal (Ref1 n) in order to eliminate the interfering signal (I) present in the digital combined signal (R2n) includes the iterative minimisation of the difference between the digital combined signal (R2n) and the first digital reference signal (Ref1n) in order to send the digital resulting signal (Run) to a data-processing module (60) of the receiver device (RE), where the difference to be minimised takes the form $R2n - \overline{Ref1n}^T.\overline{a}$, where each term of vector $\overline{Ref1n}$ represents the first digital reference signal with a given digital time lag, and where the terms of vector $\overline{a}$ act as adjustment parameters.

11. Method (100) according to claim 9, **characterised by** the fact that the step (CORR2) of combination using the signal-processing device (50) of the digital combined signal (R2n), of the first digital reference signal (Ref1n) and of the digital modified reference signal (Ref2n) in order to eliminate the interfering signal (I) present in the digital combined signal (R2n) includes the iterative minimisation of the difference between the digital sum signal (R2n), the first digital reference signal (Ref1n) and the digital modified reference signal (Ref2n) in order to send the digital resulting signal (Run) to a data-processing module (60) of the receiver device (RE), where the difference to be minimised takes the form $R2n'' = R2n - \overline{Ref1n}^T.\overline{a1} - \overline{Ref2n}^T.\overline{a2}$, where each term of vector $\overline{Ref1n}$ represents the first digital reference signal with a given digital time lag, where the terms of vector $\overline{a_1}$ act as adjustment parameters, where each term of vector $\overline{Ref2n}$ represents the digital modified reference signal with a given digital time lag, and where the terms of vector $\overline{a_2}$ act as adjustment parameters.

12. Method (100) according to either of the previous two claims, **characterised by** the fact that the iterative minimisation of the difference between the digital combined signal and at least one digital reference signal is accomplished using an algorithm of the stochastic gradient type.

13. Method (100) according to any of claims 8 to 12, **characterised by** the fact that the steps of analogue-to-digital conversion provide a digital representation of the baseband signals.

14. Method (100) according to any of claims 8 to 13, **characterised by** the fact that it includes a step of digital filtering, applied before the digital signal-processing device (50), of the first digital reference signal (Ref1n), of the digital modified reference signal (Ref2n), and of the digital combined signal (R2n), in order to select the frequency range corresponding to the receiver band of the receiver (RE).

15. System for transmission/reception of a radio signal including at least one transmission antenna connected to a transmitter device and a reception antenna connected to a receiver device, where said transmission/reception device is **characterised by** the fact that it includes the device (1) for reducing the intensity of an interfering signal according to claims 1 to 7.

16. Device for transmission/reception of a radio signal including an antenna connected both to a transmitter device and to a receiver device, where said device is **characterised by** the fact that it includes a device (1) for reducing the intensity of an interfering signal according to claims 1 to 7.

Figure 1

Figure 2

EP 3 255 802 B1

Figure 3

Figure 4

Figure 5

EP 3 255 802 B1

Figure 6a

Figure 6b

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 20150171903 A